# EUROPEAN PATENT SPECIFICATION

(11) **EP 1 321 003 B1**
(45) Date of publication and mention of the grant of the patent: **02.11.2006**
(21) Application number: 01965421.9
(22) Date of filing: 10.09.2001
(51) Int. Cl.: H04Q 7/22

(54) **ROUTING SHORT MESSAGES**
LEITWEGLENKUNG VON KURZNACHRICHTEN
ACHEMINEMENT DE MESSAGES COURTS

(30) Priority: 28.09.2000 GB 0023809
(43) Date of publication of application: 25.06.2003
(73) Proprietor: Vodafone Group PLC, Newbury Berkshire RG14 2FN (GB)
(72) Inventor: HARRIS, Ian, Devizes, Wiltshire SN10 2LD (GB)
(74) Representative: Foster, Mark Charles
(86) International application number: PCT/GB2001/004049
(87) International publication number: WO 2002/028129

(56) References cited:
- WO-A-00/47004

## Description

The invention relates to a telecommunications system, comprising first and second radio networks with each of which respective mobile transceivers are associated for originating and receiving messages which comprise at least messages of a predetermined type, each mobile transceiver having an address which is recognisable in both radio networks, and a respective control means associated with each network for handling messages of the predetermined type originating in that network and for onwardly transmitting such messages to the mobile transceivers in that or the other network according to a destination address of the message. Such a system may, for example, be a GSM telecommunication system in which the messages of the predetermined type are in the form of "short messages". Short messages are messages of a type defined in the GSM standard specifications and include text messages; binary data messages and other specified types of messages. However, it should be understood that the invention is not limited to the use of short messages in a GSM network. It may be used, for example, for facilitating the sending and receiving of short messages, or their equivalents in UMTS or 3G (Third Generation) telecommunication systems or in GPRS (General Packet Radio Systems). However, it can also be applied to the sending and receiving of messages of predetermined type in other types of radio networks.

The invention is concerned with expanding and facilitating the use of messages of a predetermined type, such as GSM short messages for example.

WO-A-00/47004 discloses an arrangement for routing a short message into a data network on a telecommunications system. A short message is routed from a first short message service center via a special converter component. The document discloses a single converter component (or entity) MSCM. To forward a message to a data network, a message is prefixed with the numeric sequence "+123". Such a prefixed telephone number will result in the message being transmitted to the MSCM. The MSCM acts as a mobile switching center. The MSCM function is to select the destination in the data network of the message in dependence upon the part of the telephone number succeeding the prefix "+123".

According to the invention the system as claimed in claim 1 is provided.

Telecommunication systems embodying the invention will now be described, by way of example only, with reference to the accompanying diagrammatic drawing which is a block diagram of one of the systems.

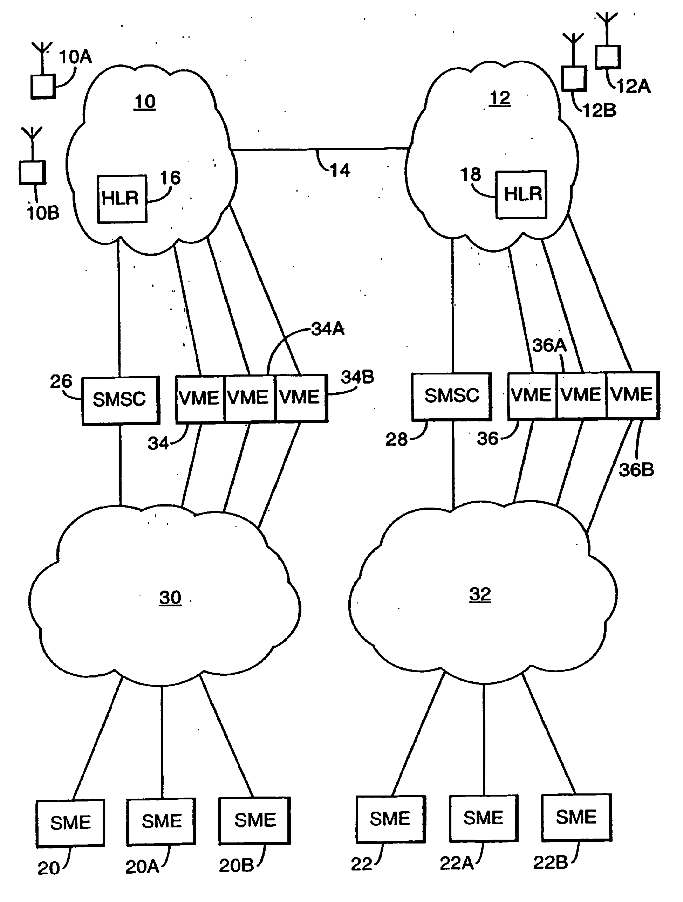

The Figure shows a cellular telecommunications system with a home network 10 and a remote network 12. The home network 10 has mobiles 10A, 10B (and others not shown) registered with it. The remote network 12 has mobiles 12A, 12B (and others not shown) registered with it. It is assumed that the networks 10,12 are GSM networks interconnected in a standard way, using an interconnect 14 (such as an SS7 link, for example) and that an interconnection agreement exists between the networks. Within each network 10,12, the details of the mobiles associated with (or "belonging" to) that network are stored in a respective home location register HLR shown at 16 and 18. When a mobile (e.g. 10A in network 10) wishes to communicate with another mobile or fixed telephone, it will signal accordingly to the base station of the cell of the network where it is situated. The subscriber's details are obtained from the HLR 16 and temporarily placed in a visitor location register (VLR) appropriate to that cell and are then used to enable the mobile to complete the connection with the called destination. If mobile 10A is temporarily located in network 12, and wishes to communicate with another mobile or fixed telephone, it again signals to the base station of the appropriate cell in network 12. Because of the interconnection agreement between the networks 10,12, network 12 is able to obtain the subscriber's details from HLR16 in network 10 and temporarily stores those details in the cell (in network 12) where the subscriber is temporarily located to enable the mobile to complete the desired call. In this known way, therefore, mobiles in either of the networks can communicate with other mobiles in the same or the further network or with fixed telephones (or with mobiles in other networks not shown).

The procedure for transmission of "short messages" is different. The term "short messages" as used herein means short messages as defined in the GSM standard specifications. Such messages are commonly in the form of text messages of limited maximum length, but they can have other forms, such as in the form of binary data. As will be explained in more detail below, however, the invention is not limited to the transmission of messages of this "short message" type.

Short messages may be sent to or from mobiles such as the mobiles 10A, 10B and the others belonging to the home network 10 and the mobiles 12A, 12B and the others belonging to the remote network 12. However, in addition, short messages may be sent to or from "short message entities" (SMEs) such as shown at 20,20A,208..., and 22,22A,22B.... These SMEs may be in the form of terminals of various sorts such as fixed terminals for sending short messages of various types to mobiles and for receiving short messages from mobiles. For example, the SMEs may be in the form of terminals associated with banking computers or computers of other types generating information (commercial information, for example) for transmission to mobiles and for receiving short messages in response from mobiles, but may be of many other types, such as application servers of various types.

Within the GSM system, each network has a respective short message service centre (SMSC) associated with it, such as shown at 26 and 28 respectively. The SMEs 20, 20A, 20B..., 22, 22A, 22B... are connected to the respective SMSCs 26,28 by fixed networks 30,32 of suitable type. When a mobile belonging to a particular network wishes to send a short message, it will normally do this via the SMSC of its own network. Thus, for example, if the mobile 10A wishes to send a short message to mobile 10B, the short message is automatically addressed by the mobile 10A to SMSC 26, which then delivers the short message to mobile 10B (after registering the necessary details to enable a charge to be made to mobile 10A). Each short message therefore carries the address of the local SMSC (this address is automatically generated by the sender), together with the address of the intended destination of the short message. When the local SMSC receives the short message, it then reads the address (the MSISDN or Mobile Station ISDN number or telephone number of the intended destination) and despatches the short message accordingly.

The same procedure is followed if mobile 10A in the network 10 wishes to send a short message to mobile 12A in the network 12. Thus, the short message is automatically sent to SMSC 26 which then recognises the destination address as being the address of a mobile registered with the network 12, and the short message will be despatched over the link 14 to the network 12 which will then direct the short message to mobile 12A. Again, the SMSC 26 normally generates a charging record for the short message which will be billed to mobile 10A.

It may be, of course, that the mobile 12A is at this time roaming within network 10. The network 12 will be aware of this, and aware of the current location of mobile 12A, and will despatch the short message back to the network 10 and thence to mobile 12A.

Similarly, if mobile 10A is currently roaming within network 12, and wishes to send a short message to mobile 12A, the short message will still be addressed automatically to SMSC 26 in the network. As before, the SMSC 26 will recognise the destination address of the short message as being for the mobile 12A in the network 12 and will despatch the short message accordingly.

Obviously, the same procedure is followed if a mobile, such as mobile 12A, in the network 12 wishes to send a short message: it will normally only do so by addressing the short message initially to the SMSC 28 associated with the network 12 which will then read the destination address and despatch the short message accordingly.

If a mobile attempts to avoid this procedure, by altering the address of the SMSC to which its short messages are sent, short message delivery may fail. Thus, for example, if mobile 12A is adjusted so that the address of the SMSC to which it sends its short message is SMSC 26 (instead of SMSC 28), SMSC 26 will normally reject the received short message because it will recognise that the IMSI of the originating mobile 12A is an IMSI of a mobile belonging to another network for which it has no subscriber details and for which it cannot originate a charge.

It should be noted here that the term "short message entity" includes any entity capable of receiving and transmitting short messages. The mobiles themselves are therefore also "short message entities". For simplicity, however, the term "short message entity" will be used herein to describe the SMEs 20,20A,20B... and 22,22A,22B (properly termed "fixed network short message entities") and will not be specifically applied to the mobiles.

So far, the transmission of short messages between mobiles has been described. The transmission of short messages to and from an SME (e.g. 20;20A,20B...22,22A,22B) will now be considered.

If a mobile wishes to send a short message to an SME associated with its own network, this can easily be done. For example, if mobile 10A wishes to send a short message to SME 20, the message is addressed to SMSC 26 by the mobile in the normal way, and the SMSC will then read the destination address and recognise it as being intended for SME 20, and send it accordingly by the fixed network 30. Similarly, a mobile (such as mobile 12A) registered with the remote network 12 can send a short message to SME 22 by addressing it the SMSC 28 which then reads the destination address, recognises it as being the address of the SME 22 and passes on the message accordingly via the fixed network 32. An SME can send a short message to a mobile or other SME belonging to the same network by addressing the message to its associated SMSC, the message carrying the address (the MSISDN of the mobile or the address, such as the X.25 address, of the other SME).

Problems arise, however, when a mobile belonging to one network wishes to send a short message to an SME associated with another network. This problem arises in part because the various standards relating to GSM operations and to short message services do not extend to SMEs interconnected to SMSCs via fixed networks. Operators of SMEs (such as providing banking or other financial information) may wish to establish their businesses on an international scale. Thus, for example, the operator of SME 20 may wish the SME to be accessible not only from mobiles 10A, 10B belonging to the network 10 but also from mobiles 12A,12B associated with the remote network 12 and, of course, other networks not shown. If (for example) mobile 12A attempts to send a short message to SME 20 in accordance with the normal procedure for short messages, it will send the short message initially to SMSC 28. However, SMSC 28 will normally not be able to recognise the address of SME 20 because the address of SME 20 will not be the standardised form of a normal mobile address (MSISDN). Therefore, the short message cannot be sent in this way. Even if the SMSC 28 can possibly recognise the address of SME 20, it will normally not be able to send the message to SME 20 because of protocol problems.

Various arrangements are known for attempting to overcome this problem.

One solution is possible for the restricted case where dialogue with a mobile is initiated by an SME itself. Thus, for example, SME 20 can send a short message to a mobile 12A belonging to another network (network 12) by addressing the short message to the remote mobile's MSISDN, the short message being of course sent initially by the SME 20 to SMSC 26 through the fixed network 30 and then via network 10 and the link 14 to network 12. There is no problem about transmission in this direction, because SMSC 26 is able to route short messages to the intended destination. When dialogue is successfully initiated by the SME in this way, a "Reply Path" is automatically set up by the SME in the SMSC 26, soliciting one short message response (only) from the mobile 12A, which passes through the SMSC 26 to the SME 20 without hindrance, because the path has automatically been pre-set and the mobile 12A does not have to know the particular address of the SME 20. However, this is not a solution to the general problem because, by definition, it is only effective when the dialogue is initiated by the SME 20.

Another possible solution, but one which is only possible where the owner of the SME owns or controls the relevant mobiles, is for the owner to issue all the mobiles with specific SIMs (subscriber identity modules or smart cards) which carry the address of the SMSC with which the SME is associated. Thus, if the owner of SME 20 also owns mobiles 12A,12B and others belonging to network 12, it could issue them with specific SIMs which will ensure that the short messages which they initiated will automatically be sent the preferred SMSC (SMSC 26 in this case), and thence to SME 20. Clearly, this solution is only applicable in the restricted circumstances where the owner of SME 20 owns or controls mobiles 12A and 12B.

A further possible solution is for mobiles belonging to one network wishing to send short messages to SMEs associated with another network to alter the stored SMSC address which they hold so that it is the address of the SMSC in the other network instead of being the address of the SMSC of their own network. Thus, for example, if mobile 12A, belonging to remote network 12, wishes to send a short message to SME 20 associated with the network 10, it could change its "normal" SMSC address to be the address of SMSC 26 (instead of the address of SMSC 28). At the same time, of course, it will give the destination address as being the address of SME 20. When SMSC 26 receives the short message from mobile 12A, it will be able to recognise the destination address as being the address of SME 20 and will forward the message accordingly. However, this is in general not a satisfactory solution because the mobile will need to change its stored SMSC address back to the address of SMSC 28 for normal short message service use; changing SMSC addresses is complicated and unsatisfactory. Furthermore, the SMSC 26 will not be able to recognise the MSISDN of mobile 12A and will therefore not be able to carry out a charging function. Such an arrangement is therefore only possible where no charging is contemplated - but such un-charged arrangements produce their own problems of uncontrolled and uncontrollable access and congestion.

In another solution, each SMSC is provided with not one but several different or "virtual" SMSC addresses, and each SMSC address is associated with a particular SME. When a mobile wishes to originate a short message to a particular SME, it addresses the message to the corresponding SMSC address, and the SMSC then directly forwards the short message to the appropriate SME. This solution also, of course, requires the mobile to select an alternative SMSC address - which as explained above, is difficult and generally unsatisfactory. Furthermore, the network operator will in general wish to charge the operator of each SME for all short messages forwarded to it ― whereas the owner of each SME will only wish to pay for short messages which it receives from its own registered customers. In order to overcome this problem, it has been proposed to provide the SMSC with customer databases corresponding to each virtual SMSC address. When a short message is received at a particular virtual SMSC address, the SMSC checks the corresponding database to find out whether the short message originates from a genuine customer; if not, the call is blocked. However, the use of these databases is likely to impact on the performance of the SMSC.

The invention aims to avoid these difficulties and, in particular, to avoid the need for a mobile belonging to one network and wishing to send a short message to an SME associated with another network to address the short message to the SMSC of the other network.

As shown in the Figure, the system provides a "virtual mobile equipment" (VME) 34 which is associated with the SME 20, that is, it is linked to SME 20 in a suitable way. The VME 34, as its name suggests, is structured to appear to the other network (network 12 and any further network) as an ordinary mobile. In particular, it has a mobile "number", or address, which is an MSISDN and has an associated IMSI. Thus, mobile 12A (for example) in network 12, wishing to send a short message to SME 20, sends the short message to VME 34 using standard procedure: it sends its short message to its own SMSC 28, whereupon SMSC 28 recognises the MSISDN of the VME 34 as indicating a mobile equipment belonging to the network 10 and despatches the short message accordingly to network 10 via network 12, and the link 14, and thence to VME 34.

As explained, VME 34 is directly linked with SME 20. When it receives the short message from mobile 12A (via SMSC 28 as explained), it then passes the short message to SME 20.

There is thus no need for the mobiles to alter the address of the SMSC to which they send their short messages.

When VME 34 learns that the message has been received by SME 20, but not until then, it transmits an appropriate acknowledgement to SMSC 28. If the message is not successfully received by SME 20, VME 34 transmits a "negative" acknowledgement to SMSC 28, allowing SMSC 28 to carry out the re-try procedure. In this way, the VME enables the system to implement the normal GSM acknowledgement procedure.

As shown in the Figure, there are several VMEs 34,34A,34B,36,36A,36B, each linked to a respective one of the SMEs 20,20A,20B..., 22,22A,22B..., each VME having a different MSISDN. Short messages can thus be addressed to any of the SMEs of network 10 by a mobile in network 12, the mobile simply ensuring that the destination address of the short message is the MSISDN of the appropriate VME in network 10. In each case, the short messages are sent via the SMSC 28 of network 12. Likewise, of course, short messages can be sent by any of the mobiles belonging to network 10, via SMSC 26 and the appropriate VME in network 12.

In practice, the VMEs can be implemented as part of the respective SMSCs 26,28, although they are directly addressable, via network 10 or 12, independently of the address of the respective SMSC. Instead, each could be a stand alone unit or they could be implemented logically as part of a single unit.

The mobile network 10 may wish to levy a charge on the owner of each SME (e.g. SME 20) receiving a short message via the respective VME (VME 34 in this case). However, the owner may only wish to accept (and pay for) short messages from its own known customers. Therefore, each VME advantageously holds a database of the known customers of the corresponding SME. When a short message is received from a mobile by a VME, the VME can therefore use the database to check that the short message comes from one of its known customer: if it does, it is passed on to the SME but it is rejected otherwise so that no call charge is incurred. The databases can be managed and up-dated by the respective SMEs.

When a VME receives and accepts a short message from a remote mobile and passes it successfully to the relevant SME, it will send an appropriate acknowledgement signal back to the SMSC in the remote network Thus, if the short message is correctly transferred from a mobile 12A, 12B... to the appropriate SME 20, 20A, 20B..., this will be signalled to SMSC 28. If the VME determines that the originator of the short message for the corresponding SME is not in fact a known customer of that SME, it may signify permanent blockage of the short message to the SMSC 28. If transmission of the short message is not permanently blocked in this way but transmission fails for some temporary reason, this again is signalled to SMSC 28 so that a re-try could be performed by SMSC 28.

When an SME 20,20A,20B... sends a short message to a remote mobile such as mobile 12A, the SME will direct the message to SMSC 26 in the usual way which will then transmit the message to mobile 12A via network 10, link 14 and network 12. During this process, however, the SMSC 26 will replace the originating address of the SME with the address of the corresponding VME. In this way, therefore, it appears to the remote mobile 12A as if the short message has originated from the corresponding VME. Where the SME wishes to solicit a short message in reply from the mobile 12A, the mobile can thus automatically address the reply to the correct VME and thence to the correct SME. Again, though, the reply which mobile 12A sends to the SME will be sent via SMSC 28 in the remote network. This process of originating address substitution may be performed by elements other than the SMSC, such as by the VME.

The invention has been described above with reference to the transmission and reception of short messages in a GSM telecommunications system. However, it is not limited in this way and may be used for transmitting and receiving messages of particular type in other telecommunications networks, such as UMTS, 3G (Third Generation) and GPRS networks but also including other radio networks not necessarily cellular.

## Claims

1. A telecommunications system, comprising first and second radio networks (10; 12) with each of which respective mobile transceivers (10A, 10B; 12A, 12B) are associated for originating and receiving messages which comprise at least messages of a predetermined type, each mobile transceiver (10A, 10B; 12A, 12B) having an address which is recognisable in both radio networks (10;12), and a respective control means (26;28) associated with each network (10;12) for handling messages of the predetermined type originating in that network (10;12) and for onwardly transmitting such messages to the mobile transceivers (10A,10B;12A,12B) in that or the other network (10;12) according to a destination address of the message, comprising respective pluralities of entities (20,20A,20B;22,22A,22B) associated with each network (10;12) for originating and receiving messages of the predetermined type, the control means (26;28) associated with each network (10;12) being operative to handle messages of the predetermined type originating in that network and onwardly transmitting such messages to a said entity (20,20A,20B;22,22A,22B) associated with the same network (10;12) according to the destination address of the message, and a plurality of intermediate means (34,34A,34B), each of which has different address, which address is recognisable in both of the networks (10;12), wherein each intermediate means (34,34A,34B) is associated with a respective one of the entities (20,20A,20B) associated with the first network (10), and wherein a message of the predetermined type from the control means (28) of at least the second network (12) and including the address of one of said intermediate means (34,34A,34B) is deliverable directly to the only one of the intermediate means (34,34A,34B) having that address, that intermediate means (34,34A,34B) then being operable to directly transmit that message to the associated one of the entities (20,20A,20B); and wherein each message of the predetermined type has associated with it an originating address for expediting a reply, and comprising address substitution means operative so that the originating address of each message of the said predetermined type originated by any particular one of the entities (20, 20A, 20B; 22, 22A, 22B) corresponds to the address of the intermediate means (34,34A,34B;36,36A,36B) with which the entity is associated.

2. A system according to claim 1, **characterised in that** the messages of the predetermined type are data messages.

3. A system according to claim 2, **characterised in that** the messages of the predetermined type are text messages.

4. A system according to claim 2, **characterised in that** the messages of the predetermined type are binary messages.

5. A system according to claim 1, **characterised in that** the radio networks (10;12) are cellular networks.

6. A system according to claim 5, **characterised in that** the radio networks (10;12) are GSM networks.

7. A system according to claim 5, **characterised in that** the radio networks (10;12) are UMTS or 3G (Third Generation) networks.

8. A system according to claim 1, **characterised in that** the radio networks (10;12) are GPRS networks.

9. A system according to any preceding claim, **characterised in that** the mobile transceivers (10A,10B;12A,12B) are capable of originating and receiving messages of at least one other type including voice messages.

10. A system according to claim 5, **characterised in that** the radio networks (10; 12) are GSM cellular telecommunication networks between which an interconnection agreement exists and the messages of the predetermined type are GSM-type short messages, and that each respective control means (26;28) is a respective short message service centre (SMSC).

11. A system according to any preceding claim, **characterised in that** there is a plurality of said intermediate means (36,36A,36B) associated with the second network (12), each having an address recognisable in both the networks (10; 12) for receiving a message of the predetermined type from the control means (26) of at least the first network (10) and for directly transmitting that message to a corresponding one of the entities (22,22A,22B) associated with the second network (12).

12. A system according to any preceding claim, **characterised in that** each intermediate means (34,34A,34B;36,36A,36B) is operative to receive a message of the said predetermined type from the control means (26;28) of either network (10;12) and to transmit that message to a plurality of corresponding ones of the entities (20, 20A, 20B; 22, 22A, 22B) each of which is associated with the same network (10; 12) as is that intermediate means (34, 34A, 34B; 36, 36A, 36B).

13. A system according to any preceding claim, **characterised by** monitoring means associated with each intermediate means (34,34A,34B;36,36A,36B) for monitoring messages of the said predetermined type received by the intermediate means (34,34A,34B;36,36A,36B) and for blocking the direct transmission of certain ones of those messages to the corresponding one of the entities (20,20A,20B;22,22A,22B).

14. A system according to claim 13, **characterised in that** the monitoring means identifies the certain ones of the messages by reference to the addresses of the mobile transceivers (10A,10B;12A,12B) from which they originate.

15. A system according to claim 14, **characterised in that** the monitoring means maintains a database of the addresses of the mobile transceivers (10A,10B;12A,12B) from which messages of the said predetermined type received by the intermediate means (34,34A,34B;36,36A,36B) are permitted to be transmitted to the corresponding one or ones of the entities (20,20A,20B;22,22A,22B).

16. A system according to claim 15, **characterised in that** the database for the or each intermediate means (34,34A,34B;36,36A,36B) is maintained by the corresponding one or ones of the entities (20,20A,20B;22,22A,22B).

17. A system according to any preceding claim, **characterized in that** the first network (10) is a home cellular telecommunication network, **in that** the second network (12) is a remote cellular telecommunication network and **in that** there is an interconnection agreement between the home network and the remote network.

18. A system according to any preceding claim, **characterized in that** the messages of the predetermined type are short messages.

19. A system according to claim 18, **characterized in that** said control means (26;28) comprise short message service centres and **in that** each short message service centre is for handling short messages originating from its network but not short messages originating from mobile transceivers associated with the other network.

20. A system according to any preceding claim, **characterized in that** the address of each mobile transceiver is of a predetermined format.

## Revendications

1. Système de télécommunications, comprenant des premier et second réseau radio (10 ; 12) à chacun desquels des émetteurs-récepteurs mobiles respectifs (10A, 10B ; 12A, 12B) sont associés pour émettre et recevoir des messages qui comprennent au moins des messages d'un type prédéterminé, chaque émetteur-récepteur mobile (10A, 10B ; 12A, 12B) comportant une adresse qui est reconnaissable dans les deux réseaux radio (10 ; 12), et un moyen de commande respectif (26, 28) associé à chaque réseau (10 ; 12) afin de gérer des messages du type prédéterminé ayant pour origine ce réseau (10 ; 12) et afin de transmettre au-delà de tels messages aux émetteurs-récepteurs mobiles (10A, 10B ; 12A, 12B) dans ce réseau ou l'autre réseau (10 ; 12) conformément à une adresse de destination du message, comprenant des pluralités respectives d'entités (20, 20A, 20B ; 22, 22A, 22B) associées à chaque réseau (10 ; 12) pour émettre et recevoir des messages du type prédéterminé, le moyen de commande (26 ; 28) associé à chaque réseau (10 ; 12) pouvant être mis en oeuvre pour gérer des messages du type prédéterminé ayant pour origine ce réseau et transmettre au-delà de tels messages à une dite entité (20, 20A, 20B ; 22, 22A, 22B) associée au même réseau (10 ; 12) conformément à l'adresse de destination du message, et une pluralité de moyens intermédiaires (34, 34A, 34B), dont chacun présente une adresse différente, laquelle adresse est reconnaissable dans les deux réseaux (10 ; 12), où chaque moyen intermédiaire (34, 34A, 34B) est associé à une entité respective parmi les entités (20, 20A, 20B) associées au premier réseau (10), et où un message du type prédéterminé provenant du moyen de commande (28) du au moins second réseau (12) et comprenant l'adresse d'un moyen intermédiaire parmi lesdits moyens intermédiaires (34, 34A, 34B) peut être délivré directement à un seul moyen intermédiaire parmi les moyens intermédiaires (34, 34A, 34B) ayant cette adresse, ce moyen intermédiaire (34, 34A, 34B) pouvant alors être mis en oeuvre pour transmettre directement ce message à une entité associée parmi les entités (20, 20A, 20B), et où chaque message du type prédéterminé a associé à celui-ci une adresse d'origine afin d'expédier une réponse, et comprenant un moyen de substitution d'adresse pouvant être mis en oeuvre de sorte que l'adresse d'origine de chaque message dudit type prédéterminé émis par une entité particulière quelconque parmi les entités (20, 20A, 20B ; 22, 22A, 22B) correspond à l'adresse du moyen intermédiaire (34, 34A, 34B ; 36, 36A, 36B) auquel l'entité est associée.

2. Système selon la revendication 1, **caractérisé en ce que** les messages du type prédéterminé sont des messages de données.

3. Système selon la revendication 2, **caractérisé en ce que** les messages du type prédéterminé sont des messages de texte.

4. Système selon la revendication 2, **caractérisé en ce que** les messages du type prédéterminé sont des messages binaires.

5. Système selon la revendication 1, **caractérise en ce que** les réseaux radio (10 ; 12) sont des réseaux cellulaires.

6. Système selon la revendication 5, **caractérisé en ce que** les réseaux radio (10 ; 12) sont des réseaux GSM.

7. Système selon la revendication 5, **caractérisé en ce que** les réseaux radio (10 ; 12) sont des réseaux de type UMTS ou 3G (Troisième génération).

8. Système selon la revendication 1, **caractérisé en ce que** les réseaux radio (10 ; 12) sont des réseaux de type GPRS.

9. Système selon l'une quelconque des revendications précédentes, **caractérisé en ce que** les émetteurs-récepteurs mobiles (10, 10B ; 12A, 12B) sont capables d'émettre et de recevoir des messages d'au moins un autre type comprenant des messages vocaux.

10. Système selon la revendication 5, **caractérisé en ce que** les réseaux radio (10 ; 12) sont les réseaux de télécommunications cellulaires de type GSM entre lesquels un accord d'interconnexion existe et les messages du type prédéterminé sont des messages courts de type GSM, et **en ce que** chaque moyen de commande respectif (26 ; 28) est un centre de service des messages courts respectifs (SMSC).

11. Système selon l'une quelconque des revendications précédentes, **caractérisé en ce qu'**il existe une pluralité desdits moyens intermédiaires (36, 36A, 36B) associés au second réseau (12), chacun ayant une adresse reconnaissable dans les deux réseaux (10 ; 12) afin de recevoir un message du type prédéterminé à partir du moyen de commande (26) du au moins premier réseau (10) et destiné à transmettre directement ce message à une entité correspondante parmi les entités (22, 22A, 22B) associées au second réseau (12).

12. Système selon l'une quelconque des revendications précédentes, **caractérisé en ce que** chaque moyen intermédiaire (34, 34A, 34B ; 36, 36A, 36B) peut être mis en oeuvre pour recevoir un message dudit type prédéterminé à partir du moyen de commande (26 ; 28) de chaque réseau (10 ; 12) et pour transmettre ce message à une pluralité d'entités correspondantes parmi les entités (20, 20A, 24B ; 22, 22A, 22B), dont chacune est associée au même réseau (10 ; 12) que celui auquel est associé ce moyen intermédiaire (34, 34A, 34B; 36, 36A, 36B).

13. Système selon l'une quelconque des revendications précédentes, **caractérisé par** un moyen de surveillance associé à chaque moyen intermédiaire (34, 34A, 34B ; 36, 36A, 36B) afin de surveiller les messages dudit type prédéterminé reçus par le moyen intermédiaire (34, 34A, 34B ; 36, 36A, 36B) et afin de bloquer la transmission directe de certains messages parmi ces messages vers l'entité correspondante parmi les entités (20, 20A, 20B ; 22, 22A, 22B).

14. Système selon la revendication 13, **caractérisé en ce que** le moyen de surveillance identifie certains messages parmi les messages par référence aux adresses des émetteurs-récepteurs mobiles (10A, 10B ; 12A, 12B) dont ils proviennent

15. Système selon la revendication 14, **caractérisé en ce que** le moyen de surveillance maintient une baisse de données des adresses des émetteurs-récepteurs mobiles (10A, 10B ; 12A, 12B) à partir desquels les messages dudit type prédéterminé reçus par le moyen intermédiaire (34, 34A, 34B ; 36, 36A, 36B) peuvent être transmis à l'entité correspondante ou aux entités correspondantes parmi les entités (20, 20A, 20B ; 22, 22A, 22B),

16. Système selon la revendication 15, **caractérisé en ce que** l'adresse de données pour les moyens intermédiaires ou chaque moyen intermédiaire (34, 34A, 34B ; 36, 36A, 36B) est entretenue par l'entité correspondante ou les entités correspondantes parmi les entités (20, 20A, 20B ; 22, 22A, 22B).

17. Système selon l'une quelconque des revendications précédentes, **caractérisé en ce que** le premier réseau (10) est un réseau de télécommunications cellulaire domestique, **en ce que** le second réseau (12) est un réseau de télécommunications cellulaire à distance et **en ce qu'**il existe un accord d'interconnexion entre le réseau domestique et le réseau à distance.

18. Système selon l'une quelconque des revendications précédentes, **caractérisé en ce que** les messages du type prédéterminé sont des messages courts.

19. Système selon la revendication 18, **caractérisé en ce que** ledit moyen de commande (26 ; 28) comprend des centres de service de message court, **en ce que** chaque centre de service de message court est destiné à gérer des messages courts provenant de son réseau et non pas des messages courts provenant des émetteurs-récepteurs mobiles associés à l'autre réseau.

20. Système selon l'une quelconque des revendications précédentes, **caractérisé en ce que** l'adresse de chaque émetteur-récepteur mobile est d'un format prédéterminé.

## Patentansprüche

1. Telekommunikationssystem, das ein erstes und ein zweites Funk-Netzwerk (10; 12) mit dem jeweils mobile Sende-Empfangs-Geräte (10A. 10B; 12A, 12B) zum Absenden und Empfangen von Nachrichten verbunden sind, die wenigstens Nachrichten eines vorgegebenen Typs umfassen, wobei jedes mobile Sende-Empfangs-Gerät (10A, 10B; 12A, 12B) eine Adresse hat, die in beiden Funk-Netzwerken (10; 12) erkannt werden kann, und eine entsprechende Steuereinrichtung (26; 28) umfasst, die mit jedem Netzwerk (10; 12) verbunden ist, um Nachrichten des vorgegebenen Typs zu verarbeiten, die in diesem Netzwerk (10; 12) abgesendet werden, und diese Nachrichten gemäß einer Zieladresse der Nachricht zu den mobilen Sende-Empfangs-Geräten (10A, 10B; 12A, 12B) in diesem oder dem anderen Netzwerk (10; 12) weiter zu senden, wobei es jeweilige Vielzahlen von Einheiten (20, 20A, 20B; 22, 22A, 22B) umfasst, die mit jedem Netzwerk (10; 12) verbunden sind, um Nachrichten des vorgegebenen Typs abzusenden und zu empfangen, und die Steuereinrichtung (26; 28), die mit jedem Netzwerk (10; 12) verbunden ist, in Funktion Nachrichten des vorgegebenen Typs verarbeitet, die in diesem Netzwerk abgesendet werden, und diese Nachrichten entsprechend der Zieladresse der Nachricht zu der Einheit (20, 20A, 20B; 22, 22A, 22B) weiter sendet, die mit dem gleichen Netzwerk (10; 12) verbunden ist, sowie eine Vielzahl von Zwischeneinrichtungen (34, 34A, 34B), von denen jede eine andere Adresse hat, wobei diese Adresse in beiden Netzwerken (10; 12) erkannt werden kann und jede Zwischeneinrichtung (34, 34A, 34B) mit einer jeweiligen der Einheiten (20, 20A, 20B) verbunden ist, die mit dem ersten Netzwerk (10) verbunden sind, und eine Nachricht des vorgegebenen Typs von der Steuereinrichtung (28) wenigstens des zweiten Netzwerks (12), die die Adresse einer der Zwischeneinrichtungen (34, 34A. 34B) enthält, direkt nur zu der einen der Zwischeneinrichtungen (34, 34A, 348) geliefert werden kann, die diese Adresse hat, und diese Zwischeneinrichtung (34, 34A, 34B) dann so betrieben werden kann, dass sie diese Nachricht direkt zu der verbundenen einer der Einheiten (20, 20A, 20B) sendet; und wobei mit jeder Nachricht des vorgegebenen Typs eine Absendeadresse zum Zustellen einer Antwort verbunden ist, und es eine Adressen-Substitutionseinrichtung umfasst, die so arbeitet, dass die Absendeadresse jeder Nachricht des vorgegebenen Typs, die durch eine bestimmte der Einheiten (20, 20A, 208: 22, 22A, 22B) abgesendet wurde, der Adresse der Zwischeneinrichtung (34, 34A, 34B: 36, 36A, 36B) entspricht, mit der die Einheit verbunden ist.

2. System nach Anspruch 1, **dadurch gekennzeichnet, dass** die Nachrichten des vorgegebenen Typs Datennachrichten sind.

3. System nach Anspruch 2, **dadurch gekennzeichnet, dass** die Nachrichten des vorgegebenen Typs Textnachrichten sind.

4. System nach Anspruch 2, **dadurch gekennzeichnet, dass** die Nachrichten des vorgegebenen Typs Binär-Nachrichten sind.

5. System nach Anspruch 1, **dadurch gekennzeichnet, dass** die Funk-Netzwerke (10; 12) zellulare Netzwerke sind.

6. System nach Anspruch 5, **dadurch gekennzeichnet, dass** die Funk-Netzwerke (10; 12) GSM-Netzwerke sind.

7. System nach Anspruch 5, **dadurch gekennzeichnet, dass** die Funk-Netzwerke (10; 12) UMTS- oder 3G (Third Generation)-Netzwerke sind.

8. System nach Anspruch 1, **dadurch gekennzeichnet, dass** die Funk-Netzwerke (10; 12) GPRS-Netzwerke sind.

9. System nach einem der vorangehenden Ansprüche, **dadurch gekennzeichnet, dass** die mobilen Sende-Empfangs-Geräte (10A, 10B; 12A, 12B) in der Lage sind, Nachrichten wenigstens eines weiteren Typs, der Sprachnachrichten einschließt, abzusenden und zu empfangen.

10. System nach Anspruch 5, **dadurch gekennzeichnet, dass** die Funk-Netzwerke (10; 12) zellulare GSM-Telekommunikationsnetzwerke sind, zwischen denen eine Zusammenschaltungsvereinbarung (interconnection agreement) vorhanden ist, und die Nachrichten des vorgegebenen Typs GSM-Kurznachrichten sind, und dass jede jeweilige Steuereinrichtung (26; 28) ein jeweiliges Kurznachrichtendienst-Zentrum (Short Message Service Centre - SMSC) ist.

11. System nach einem der vorangehenden Ansprüche, **dadurch gekennzeichnet, dass** eine Vielzahl der Zwischeneinrichtungen (36, 36A, 36B) mit dem zweiten Netzwerk (12) verbunden ist, wobei sie jeweils eine Adresse haben, die in beiden Netzwerken (10; 12) erkannt werden kann, um eine Nachricht des vorgegebenen Typs von der Steuereinrichtung (26) wenigstens des ersten Netzwerks (10) zu empfangen und diese Nachricht direkt zu einer entsprechenden der Einheiten (22, 22A, 22B) zu senden, die mit dem zweiten Netzwerk (12) verbunden ist.

12. System nach einem der vorangehenden Ansprüche, **dadurch gekennzeichnet, dass** jede Zwischeneinrichtung (34, 34A, 34B; 36, 36A, 36B) in Funktion eine Nachricht des vorgegebenen Typs von den Steuereinrichtungen (26; 28) beider Netzwerke empfängt und diese Nachricht zu einer Vielzahl entsprechender der Einheiten (20, 20A, 20B; 22, 22A, 22B) sendet, von denen jede mit dem gleichen Netzwerk (10; 12) wie diese Zwischeneinrichtung (34, 34A, 34B; 36, 36A, 36B) verbunden ist.

13. System nach einem der vorangehenden Ansprüche, **gekennzeichnet durch** eine Überwachungseinrichtung, die mit jeder Zwischeneinrichtung (34, 34A, 34B; 36, 36A, 36B) verbunden ist, um Nachrichten des vorgegebenen Typs zu überwachen, die **durch** die Zwischeneinrichtung (34, 34A, 348, 36, 36A, 36B) empfangen werden, und um das direkte Senden bestimmter dieser Nachrichten zu der entsprechenden einen der Einheiten (20, 20A, 20B; 22, 22A, 22B) zu verhindern.

14. System nach Anspruch 13, **dadurch gekennzeichnet, dass** die Überwachungseinrichtung die bestimmten der Nachrichten durch Bezugnahme auf die Adressen der mobilen Sende-Empfangs-Geräte (10A, 108; 12A, 12B) identifiziert, von denen sie abgesendet werden.

15. System nach Anspruch 14, **dadurch gekennzeichnet, dass** die Oberwachungseinrichtung eine Datenbank der Adressen der mobilen Sende-Empfangs-Geräte (10A, 10B; 12A, 12B) führt, von denen Nachrichten des vorgegebenen Typs, die durch die Zwischeneinrichtungen (34, 34A, 34B; 36, 36A, 36B) empfangen werden, zu der entsprechenden einen oder den entsprechenden der Einheiten (20, 20A, 20B; 22, 22A, 22B) gesendet werden dürfen.

16. System nach Anspruch 15, **dadurch gekennzeichnet, dass** die Datenbank für die oder jede Zwischeneinrichtung (34, 34A, 34B; 36, 36A, 36B) durch die entsprechende eine oder die entsprechenden der Einheiten (20, 20A, 20B; 22, 22A, 22B) geführt wird.

17. System nach einem der vorangehenden Ansprüche, **dadurch gekennzeichnet, dass** das erste Netzwerk (10) ein zellulares Heim-Telekommunikations-Netzwerk ist, dass das zweite Netzwerk (12) ein zellulares Fern-Telekommunikations-Netzwerk ist und dass eine Zusammenschaltungsverarbeitung zwischen dem Heim-Netzwerk und dem Fern-Netzwerk vorhanden ist.

18. System nach einem der vorangehenden Ansprüche, **dadurch gekennzeichnet, dass** die Nachrichten des vorgegebenen Typs Kurznachrichten sind.

19. System nach Anspruch 18, **dadurch gekennzeichnet, dass** die Steuereinrichtungen (26; 28) Kurznachrichtendienst-Zentren umfassen und dass jedes Kurznachrichtendienst-Zentrum dazu dient, von seinem Netzwerk abgesendete Kurznachrichten zu verarbeiten, jedoch keine Kurznachrichten, die von mobilen Sende-Empfangs-Geräten abgesendet werden, die mit dem anderen Netzwerk verbunden sind.

20. System nach einem der vorangehenden Ansprüche, **dadurch gekennzeichnet, dass** die Adresse jedes mobilen Sende-Empfangs-Geräts ein vorgegebenes Format hat.
